# EUROPÄISCHE PATENTSCHRIFT

(11) **EP 3 740 399 B1**
(45) Veröffentlichungstag und Bekanntmachung des Hinweises auf die Patenterteilung: **20.10.2021**
(21) Anmeldenummer: 19723732.4
(22) Anmeldetag: 03.05.2019
(51) Int. Cl.: B60M 1/24, B60M 1/225

(54) **KLEMME UND FAHRDRAHTTRÄGERANORDNUNG**
CLAMP AND CONTACT WIRE CARRIER ASSEMBLY
ATTACHE ET ENSEMBLE SUPPORT DE FIL DE CONTACT

(30) Priorität: 18.05.2018 DE 102018207897
(43) Veröffentlichungstag der Anmeldung: 25.11.2020
(73) Patentinhaber: Siemens Mobility GmbH, 81739 München (DE)
(72) Erfinder: RÜHL, Martin, 91054 Erlangen (DE); HAHN, Gunter, 91353 Hausen (DE); TERFLOTH, Sebastian, 91080 Uttenreuth (DE)
(74) Vertreter: Deffner, Rolf
(86) Internationale Anmeldenummer: PCT/EP2019/061391
(87) Internationale Veröffentlichungsnummer: WO 2019/219410

(56) Entgegenhaltungen:
- EP-A2- 0 338 299
- WO-A1-2018/024956
- CN-U- 206 031 118
- DE-A1- 2 355 006
- DE-C1- 4 116 506
- FR-A- 633 275

## Beschreibung

Die Erfindung betrifft eine Klemme zur Befestigung eines Fahrdrahtes an einem Hängerseil sowie eine Fahrdrahtträgeranordnung umfassend mindestens eine derartige Klemme.

Bei der Gestaltung von Fahrleitungssystemen für schienengebundene Systeme (z. B. Bahnanwendungen) wurde bisher davon ausgegangen, dass der Stromabnehmer mit der Schleifleiste den Fahrdraht von seiner Unterseite in einem vorgesehenen Kontaktbereich kontaktiert. Dies wird durch eine maximale zulässige Seitenlage des Fahrdrahtes auf der Schleifleiste beschrieben, die bisher konstruktiv sichergestellt wurde. Da bei schienengebundenen Systemen der Fahrweg vorgegeben ist, kann an den meisten Positionen entlang eines Fahrweges ein Kontakt zwischen Schleifleiste und Fahrdraht im Wesentlichen senkrecht von unten erfolgen.

Bei kurvigen (und seitlich geneigten) Strecken und insbesondere bei nicht-schienengebundenen Systemen kann es durch seitliche Relativbewegung zwischen Fahrzeug und Oberleitung zu der Situation kommen, dass der Fahrdraht den vorgesehenen Kontaktbereich auf der Schleifleiste verlässt und sich in den seitlichen Grenzbereich bewegt. Dort wird der Fahrdraht nicht mehr ausschließlich von unten, sondern aufgrund der Neigung des seitlichen Stromabnehmerbereichs (oder des Auflaufhorns) von der Seite beschliffen. Aus diesem Grund werden für entsprechende Systeme Lichträume seitlich und oberhalb des Fahrdrahtes festgelegt, die frei von Fahrleitungsbauteilen zu gestalten sind. Der Lichtraum wird ausgehend von der Fahrdrahtunterkante durch einen Anstellwinkel gegenüber der Horizontalen α beschrieben und einer Lichtraumhöhe H über dem Fahrdraht.

Fahrdrähte weisen in der Regel zwei gegenüberliegende Klemmrillen auf. Über die Klemmrillen des Fahrdrahtes ist dann eine Vielzahl von Klemmen mit diversen Funktionen (Stabilisierung der Seiten- und Höhenlage des Fahrdrahtes, Leistungseinspeisungen etc.) auf dem Fahrdraht befestigt. Da eine seitliche Relativbewegung zwischen Fahrdraht und Fahrzeug für schienengebundene Systeme in der Vergangenheit nur ein nebengeordnetes Problem darstellte, sind die bekannten Klemmen deutlich breiter als der Fahrdraht an seiner dicksten Stelle. Aufgrund dieses Überstandes kann es zur Kollision zwischen dem seitlichen Bereich des Stromabnehmers und den Klemmen an der Fahrleitung kommen, wenn die Neigung des seitlichen Bereiches des Stromabnehmers gegenüber der Horizontalen größer ist als die mögliche Neigung zwischen einer Tangente an der Fahrdrahtaußenkante und dem über den Fahrdraht hinausstehenden Teil der Klemme. Weiterhin können in bisherigen Lösungen weitere, an den Klemmen befestigte, Bauteile (Seitenhalter, Hängerseil) ebenfalls den Lichtraum verletzen und so die Gefahr einer Kollision weiter erhöhen.

So ist in der DE 41 16 506 C1 eine Hängerklemme für Fahrdrähte und Tragseile von Oberleitungssystemen elektrischer Bahnen beschrieben.
Des Weiteren ist in der CN 206 031 118 U eine "suspension connection structure of bearing cable and contact line" beschrieben.

Ein Hänger umfasst in der Regel ein Hängerseil und je eine Klemme zur Verbindung mit einem Tragseil und dem Fahrdraht. Hänger dienen zur Sicherstellung der Fahrdrahthöhenlage (z-Achse, vertikale Richtung) sowie in windschiefen Oberleitungen zusätzlich der Sicherstellung der Seitenlage (y-Achse, horizontale Richtung senkrecht zur Fahrdrahtrichtung). Bei Fahrdrähten mit einer windschiefen Anordnung verlaufen Tragseil und Fahrdraht nicht senkrecht übereinander, d. h. nicht in der gleichen x-z-Ebene. Die x-Achse verläuft hier horizontal in Richtung des Fahrdrahtes. Hänger leiten die Gewichtskraft (z-Achse) und Seitenzugkraft (y-Achse) des Fahrdrahtes über je eine Anklemmstelle an Fahrdraht und Tragseil und ein dazwischen befindliches Hängerseil in das Tragseil ein.

Für lotrechte und nahezu lotrechte Kettenwerke, d. h. bis zum Mindestwinkel für windschiefe Hänger (z. B. 10°), kommen lotrechte Hängerklemmen zum Einsatz. Bisherige Hängerklemmen verletzen regelmäßig den Lichtraum, da ihr Klemmkörper und die Schraubverbindung sehr weit nach außen überstehen. Funktionsbedingt müssen lotrechte Hängerklemmen hauptsächlich Kräfte in z-Richtung übertragen.

Hänger sind die Bauteile, welche bei Oberleitungen am häufigsten vorkommen (etwa alle drei Meter). Die Montage der Hänger sowie eine Nachregulierung bei Verschiebung von Fahrdraht und Tragseil in X-Richtung sind mit verfügbarkeitsreduzierenden Sperrzeiten der Strecke verbunden. Insbesondere bei neuerdings auftretenden Baustellen für die Elektrifizierung über Autobahnen (eHighway) sind Sperrpausen mit hohen Kosten und Staubildung verbunden. Dementsprechend ist eine einfache und schnelle Montage aller Klemmen von hoher Bedeutung. Zudem muss auf Autobahnen vermieden werden, dass Bauteile bei der Montage auf die Fahrbahn fallen können, da diese sonst durch später darüberfahrende Fahrzeuge aufgewirbelt und bei nachfolgenden Fahrzeugen zu Schäden führen können.

Hänger müssen in ihrer gewöhnlichen Ausführung Dauer- und Kurzschlussströme übertragen. Der Strompfad muss diese Ströme sicher tragen können und darf infolge der Strombelastung nicht versagen, um ein Herabfallen von Bauteilen oder das Absinken der Oberleitung in den Fahrbahnraum zu verhindern. Das Hängerseil ist ein erstes Mal über eine Schlaufe (gegebenenfalls mit einer Kausche) tragend mit der Klemme verbunden. Sofern diese Verbindung nicht stromfest ausgeführt ist, muss das Hängerseil ein zweites Mal - jetzt stromfest - an der Klemme befestigt werden. Diese Art der Verbindung erfordert oftmals eine recht ausladende und schwierig zu installierende Schraubverbindung.

Für (annähernd) lotrechte Hänger können als Anforderungen für eine verbesserte Klemme der eingangs genannten Art damit zusammengefasst werden, dass:
1) der Lichtraum im Winkel α seitlich zum Fahrdraht bis zu einer Höhe H über den Fahrdraht freigehalten wird, um eine Kollision des Stromabnehmers insbesondere mit den Klemmen zu verhindern;
2) alle betrieblich auftretenden Kräfte in x-, y- und z-Richtung übertragen werden;
3) Dauer- und Kurzschlussstrom sicher übertragen werden können;
4) eine schnelle und einfache Montage des vollständig vorkonfektionierten Bauteils ohne Demontage in einzelne Kleinteile möglich ist (bei der Montage soll vermieden werden, dass durch das Montagepersonal eine falsche Justierung/Einstellung erfolgen kann, Spezialwerkzeug soll vermieden werden);
5) eine Vorzugs-Montagerichtung bzw. eine Vorgabe an die Einbaurichtung vermieden wird, um die Winkelfreiheit zu ermöglichen;
6) Werkzeugkosten durch Nutzung von möglichst wenigen, unterschiedlichen Werkzeugen (z. B. Gussformen, Gesenke beim Schmieden) minimiert werden.

Bekannte Klemmen sind in der Regel insbesondere für schienengebundene Anwendungen konzipiert und erfüllen stets nur einen Teil der genannten Anforderungen.

Die Aufgabe besteht darin, eine Klemme der eingangs genannten Art bereitzustellen, die alle oben genannten Anforderungen erfüllt und insbesondere besser für nicht-schienengebundene Anwendungen geeignet ist.

Erfindungsgemäß wird eine Klemme zur Befestigung eines Fahrdrahtes an einem Hängerseil zur Verfügung gestellt, umfassend:
- zwei Klemmhälften,
- eine Verbindungseinrichtung, zur Verbindung der beiden Klemmhälften, wobei die Klemmhälften umfassen:
- jeweils ein erstes Ende, wobei die ersten Enden in einem verbundenen Zustand der Klemmhälften aufeinander zulaufen, um in Klemmrillen eines Fahrdrahtes einzugreifen,
- jeweils ein zweites Ende, wobei die zweiten Enden in einem verbundenen Zustand der Klemmhälften so ineinandergreifen, dass sie eine Schlaufe für eine hängende Verbindung eines Hängerseils mit der Klemme bereitstellen,
- jeweils eine der anderen Klemmhälften zugewandten Auflagefläche, wobei die Auflageflächen in einem verbundenen Zustand der Klemmhälften eine stromfeste Klemmverbindung der Klemme mit dem zwischen den Klemmhälften durchgeführten Hängerseil erzeugen, wobei
die Breite der Klemme quer zur Längsrichtung des Fahrdrahts im Bereich des ersten Endes kleiner als oder gleich 120 % der horizontalen Breite des zu verbindenden Fahrdrahtes, insbesondere weniger als 2 mm breiter als der zu verbindende Fahrdraht ist und die Breite der Klemme quer zur Längsrichtung des Fahrdrahts vom ersten Ende bis zum Ansatz des zweiten Endes kleiner als oder gleich 120 % der horizontalen Breite des zu verbindenden Fahrdrahtes, insbesondere weniger als 2 mm breiter als der zu verbindende Fahrdraht ist.

Unter der Horizontalen Breite ist hier die maximale horizontale Ausdehnung des Fahrdrahtes (in y-Richtung) senkrecht zur Längsrichtung (x-Richtung) des Fahrdrahtes zu verstehen.
Die Klemme ist derart dimensioniert, dass sie in einer ideal vertikalen Klemmposition der Klemme über dem Fahrdraht nicht in einen ausgehend von der Fahrdrahtunterkante durch einen Anstellwinkel α (oder Tangenten an der Fahrdrahtunterkante mit Winkel a) relativ zur Horizontalen definierten Lichtraum eindringt. Übliche Fahrdrähte haben eine Breite von etwa 8 bis 15 mm, wobei sich dann die entsprechenden maximalen Maße für die Klemme aus dem Fahrdrahttyp ergeben, für den die Klemme vorgesehen ist (siehe beispielsweise DIN EN 50149). Mit dem erfindungsgemäßen Aufbau der Klemme ist es möglich, passende Klemmen für jede Fahrdrahtbreite bereitzustellen, die jeweils im Bereich des ersten Endes nur eine geringfügig größere horizontale Breite als der zu verbindende Fahrdraht aufweisen.
Zusätzlich wird auch sichergestellt, dass selbst bei leichter Neigung gegenüber der Vertikalen im eingebauten Zustand die Klemme nicht in den Lichtraum eindringt und somit wird die Gefahr von Kollisionen weiter verringert. Auch hier ergeben sich jeweils die maximalen Maße für die Klemme aus dem Fahrdrahttyp, für den die Klemme vorgesehen ist (siehe beispielsweise DIN EN 50149).

Mit einer Klemme dieser Bauart können alle oben genannten Anforderungen erfüllt werden. Der durch die beiden Klemmhälften gebildete Klemmkörper kann so gestaltet werden, dass alle Kräfte entsprechend den Anforderungen übertragen werden können und der freizuhaltende Lichtraum nicht verletzt wird. Der im Wesentlichen symmetrische Aufbau der Klemmhälften stellt sicher, dass es keine bevorzugte Einbaurichtung gibt. Weiterhin ist es deutlich leichter, die Klemme im Bereich des Fahrdrahtes schmaler zu gestalten, da auf einen Aufhängebügel (wie bei bisherigen Hängerklemmen) verzichtet werden kann. Um diesen Bügel zu befestigen, war bisher eine weit herausragende Schraube-Mutter-Verbindung erforderlich, die zudem den Kabelschuh für die stromfeste Verbindung aufnahm.

Bei der erfindungsgemäßen Lösung umfasst die Klemme zwei Klemmhälften, an deren Oberseite (den zweiten Enden) jeweils ein Teil (z. B. jeweils die Hälfte) einer Schlaufe (Aufhängebügel) angeformt ist. Bei dem Zusammenbau und der Befestigung am Fahrdraht greifen die beiden Klemmhälften derart ineinander, dass sich die geschlossene Schlaufe ergibt. Durch die Schlaufe kann dabei das Hängerseil geführt werden. Die Auflageflächen erlauben es zusätzlich, zwischen den Klemmhälften das Hängerseil zur stromfesten Verbindung einzuklemmen. Somit wird ein seitliches Vorstehen des Hängerseils in y-Richtung (horizontal senkrecht zur Längsrichtung des Fahrdrahtes) und die bisher notwendige Schraube-Mutter-Verbindung zur stromfesten Verbindung von Klemme und Hängerseil vermieden. Die resultierende Klemme ist deutlich schmaler, ohne auf zur Kraftübertragung notwendige Teile der Klemme zu verzichten.

Der stromfeste Anschluss des Hängerseils wird entgegen bisheriger Lösungen also dadurch erreicht, dass das Hängerseil zwischen den beiden Klemmhälften eingeklemmt wird, sobald die Klemme am Fahrdraht befestigt wird. Dazu existieren auf den Klemmhälften speziell ausgeformte Auflageflächen, die so ausgebildet sind, dass sie bei geöffneter Klemme ein Einfädeln des Hängerseils ermöglichen und mit Befestigung der Verbindungseinrichtung eine sichere
Klemmverbindung herstellen. Das Hängerseil benötigt dabei keinen Kabelschuh mehr und muss demnach auch nicht mehr gegen seinen Drall verformt werden, um den Kabelschuh in die richtige Position zu drehen. Weiterhin entfällt auch der Arbeitsschritt des Kabelschuhverpressens mit dem Hängerseil.

Die Klemme kann bis auf die Gestaltung der Verbindungseinrichtung (z. B. passende Schraubenlöcher in den Klemmhälften) symmetrisch ausgebildet sein. Dadurch wird zu beiden Seiten des Fahrdrahtes derselbe Anstellwinkel erreicht und eine Verformung der Klemme durch asymmetrische Krafteinwirkung vermieden. Außerdem kann die Klemme damit in beliebiger Orientierung auf den Fahrdraht aufgesetzt werden, da das Hängerseil von beiden Seiten zwischen den Auflageflächen eingeführt werden kann. Aufgrund der Symmetrie können die Rohteile der beiden Klemmhälften identisch sein und erfordern damit nur ein Guss- oder Schmiedewerkzeug. Schraubenlöcher können danach in die Rohteile eingebracht werden.

Die erfindungsgemäße Lösung verhindert somit zuverlässig Kollisionen der Wippenelemente/Hörner von Pantographen an Hängern der Oberleitung und vereinfacht die Installation und Herstellung der Hängerklemmen.

In einer bevorzugten Ausführungsform umfasst die Verbindungseinrichtung eine durch beide Klemmhälften verlaufende Senkschraube. Damit kann ein entlang des Fahrdrahtes noch flacherer Aufbau der Klemme erreicht und die Gefahr von Kollisionen weiter gesenkt werden.

In einer bevorzugten Ausführungsform ragt die Senkschraube im voll eingeschraubten Zustand in einem verbundenen Zustand der Klemmhälften um 1 mm oder weniger in oder gegen die Einschraubrichtung über die Klemme hinaus. Auch dies stellt einen möglichst flachen Aufbau der Klemmen sicher und vermeidet ein Eindringen in den Lichtraum. In einer weiteren bevorzugten Ausführungsform ragt die Senkschraube im voll eingeschraubten Zustand in einem verbundenen Zustand der Klemmhälften nicht in oder gegen die Einschraubrichtung über die Klemme hinaus. Die axialen Enden der Senkschraube, und gegebenenfalls einer Mutter, fluchten also im voll eingeschraubten Zustand in einem verbundenen Zustand der Klemmhälften zumindest mit den Außenseiten der Klemmhälften oder enden sogar weiter innerhalb der Klemmhälften.

In einer bevorzugten Ausführungsform besteht die Klemme nur aus den zwei Klemmhälften und der Senkschraube. Da es sich dann bei der Klemme lediglich um zwei Klemmhälften handelt, die mit einer gemeinsamen Senkschraube am Fahrdraht befestigt werden, ist die Montage schnell und einfach. Der vorkonfektionierte Hänger samt Klemme wird auf den Fahrdraht aufgesetzt und anschließend das Hängerseil der Stromschlaufe zur stromfesten Verbindung zwischen die Auflageflächen eingeführt. Durch einmaliges Zudrehen der einzigen Schraube sind dann alle Teile fest miteinander verbunden. Ein Gegenhalten von Schraube und Mutter wie bei bekannten Klemmen entfällt. Außerdem muss die Klemme mit ihrem Klemmbügel und einem angeschlossenen Kabelschuh nicht ausgerichtet oder nachjustiert werden. Somit ist die Klemme sowohl in der Vorkonfektionierung wie auch bei der Montage auf der Baustelle schneller und einfacher zu handhaben als bisherige Lösungen.

In einer bevorzugten Ausführungsform weisen die Auflageflächen eine Profilierung auf. Damit kann ein Herausrutschen des Hängerseils trotz unvermeidbaren Toleranzen im Durchmesser des Hängerseils und der durch die Auflageflächen gebildeten Öffnung vermieden werden. Die Profilierung bietet also einen Widerstand gegen ein Lösen der stromfesten Verbindung, beispielsweise durch Erschütterungen. Vorzugsweise verläuft die Profilierung senkrecht zu einer Durchführungsrichtung des Hängerseils.

In einer weiteren bevorzugten Ausführungsform verlaufen die Auflageflächen so, dass bei mit Fahrdraht und Hängerseil verbundener Klemme das zwischen den Auflageflächen eingeklemmte Hängerseil im Wesentlichen parallel zum Fahrdraht geführt wird. Somit kann ein Eindringen des Hängerseils in den Lichtraum und damit ungewollte Kollisionen mit Stromabnehmern effektiv vermieden werden und kann von beiden Seiten aus eingeführt werden, ohne eine Ausrichtung der Klemme auf dem Fahrdraht in einer Vorzugsrichtung berücksichtigen zu müssen.

Erfindungsgemäß wird außerdem eine Fahrdrahtträgeranordnung bereitgestellt, umfassend einen Fahrdraht mit zwei Klemmrillen sowie mindestens eine an den Fahrdraht geklemmte Klemme nach einem der vorstehenden Ansprüche, wobei die Breite der Klemme quer zum Fahrdraht im Bereich des ersten Endes kleiner als oder gleich 120 % der horizontalen Breite des Fahrdrahtes, insbesondere weniger als 2 mm breiter als der zu verbindende Fahrdraht ist und die Breite der Klemme quer zum Fahrdraht vom ersten Ende bis zum Ansatz des zweiten Endes kleiner als oder gleich 120 % der horizontalen Breite des Fahrdrahtes, insbesondere weniger als 2 mm breiter als der zu verbindende Fahrdraht ist.

Die Klemme ist derart dimensioniert, dass sie in einer ideal vertikalen Klemmposition der Klemme über dem Fahrdraht nicht in einen ausgehend von der Fahrdrahtunterkante durch einen Anstellwinkel α (oder Tangenten an der Fahrdrahtunterkante mit Winkel a) relativ zur Horizontalen definierten Lichtraum eindringt. Mit einer solchen Fahrdrahtträgeranordnung lassen sich Kollisionen mit Stromabnehmern effektiv vermeiden, da die Klemme in horizontaler Richtung senkrecht zum Fahrdraht relativ zum Fahrdraht sehr schmal ist. Darüber hinaus ist die Klemme über den Großteil Ihrer Höhe so schmal, dass auch bei einer leichten Schräglage der Klemme in der eingebauten Position keine Kollisionsgefahr mit Stromabnehmern vorliegt.

In einer bevorzugten Ausführungsform ist die Klemme derart dimensioniert, dass sie in einer ideal vertikalen Klemmposition der Klemme über dem Fahrdraht nicht in einen ausgehend von der Fahrdrahtunterkante durch einen Anstellwinkel α = 60° relativ zur Horizontalen definierten Lichtraum eindringt. Die Klemme ist derart dimensioniert, dass sie in einer ideal vertikalen Klemmposition der Klemme über dem Fahrdraht nicht in einen ausgehend von der Fahrdrahtunterkante durch zwei Tangenten mit einem Winkel α = 60° relativ zur Horizontalen definierten Lichtraum eindringt. Besonders bevorzugt ist die Klemme derart dimensioniert, dass sie in einer ideal vertikalen Klemmposition der Klemme über dem Fahrdraht nicht in einen ausgehend von der Fahrdrahtunterkante durch einen Anstellwinkel α = 70° relativ zur Horizontalen definierten Lichtraum eindringt. Durch diese Ausführungsformen wird in zunehmendem Maße das Risiko von Kollisionen der Klemme mit Stromabnehmern verringert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine schematische Darstellung des Lichtraumes um einen Fahrdraht,
- Figur 2: eine Seitenansicht einer Fahrdrahtträgeranordnung mit einer Klemme des Standes der Technik,
- Figur 3: eine Frontansicht der Fahrdrahtträgeranordnung des Standes der Technik gemäß Figur 2,
- Figur 4: eine Ausführungsform einer erfindungsgemäßen Klemme in einer Seitenansicht,
- Figur 5: die Ausführungsform der Klemme aus Figur 4 in einer gegenüberliegenden Seitenansicht,
- Figur 6: eine Klemmhälfte der Klemme aus Figuren 4 und 5 während der Montage.

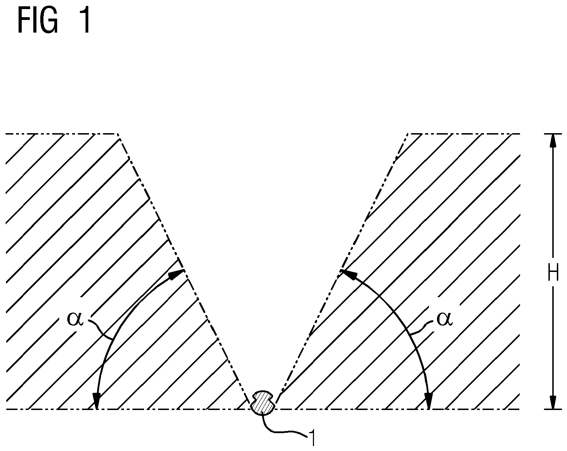

In der Figur 1 ist eine schematische Darstellung des Lichtraumes seitlich und oberhalb eines Fahrdrahtes 1 gezeigt. Der Lichtraum ist ausgehend von der Fahrdrahtunterkante durch einen Anstellwinkel α relativ zur Horizontalen und einer Höhe H definiert. Je nach Anwendung kann ein anderer Lichtraum freizuhalten sein, um die Gefahr von Kollisionen möglichst weit zu reduzieren. Für nicht-schienengebundene Anwendungen ist regelmäßig ein deutlich größerer Lichtraum freizuhalten.

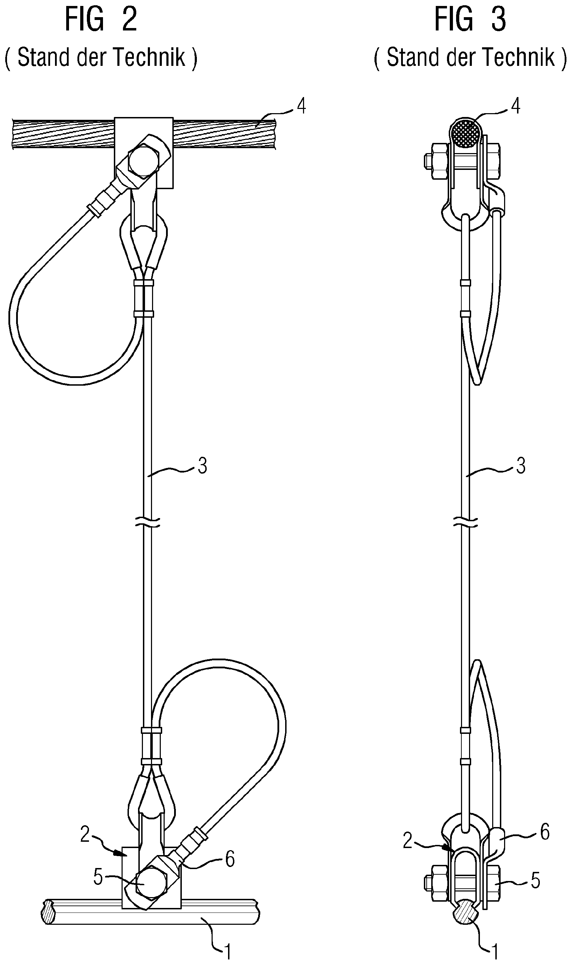

Figuren 2 und 3 zeigen eine Seitenansicht und eine Frontansicht einer Fahrdrahtträgeranordnung mit einer Klemme 2 des Standes der Technik. Die Klemme 2 ist an den Fahrdraht 1 geklemmt, wodurch dieser über ein Hängerseil 3 an einem Tragseil 4 befestigt ist. Zur stromfesten Verbindung ist mittels einer Schraubverbindung 5 ein Kabelschuh 6 mit der Klemme 2 verbunden, über den das Hängerseil 3 ein zweites Mal (hier stromfest) an der Klemme 2 befestigt ist. Das Hängerseil 3 ist dazu sowohl an der Klemme als auch am Trägerseil zu Schlaufen geformt. Letzteres erschwert die Installation und kann bei einer Verdrillung des Hängerseils zu noch stärkerem seitlichen Vorstehen der Fahrdrahtträgeranordnung führen. Insgesamt weist dieser Hänger daher ein deutlich erhöhtes Risiko für Kollisionen mit Stromabnehmern auf und ist daher für nicht-schienengebundene Anwendungen eher ungeeignet.

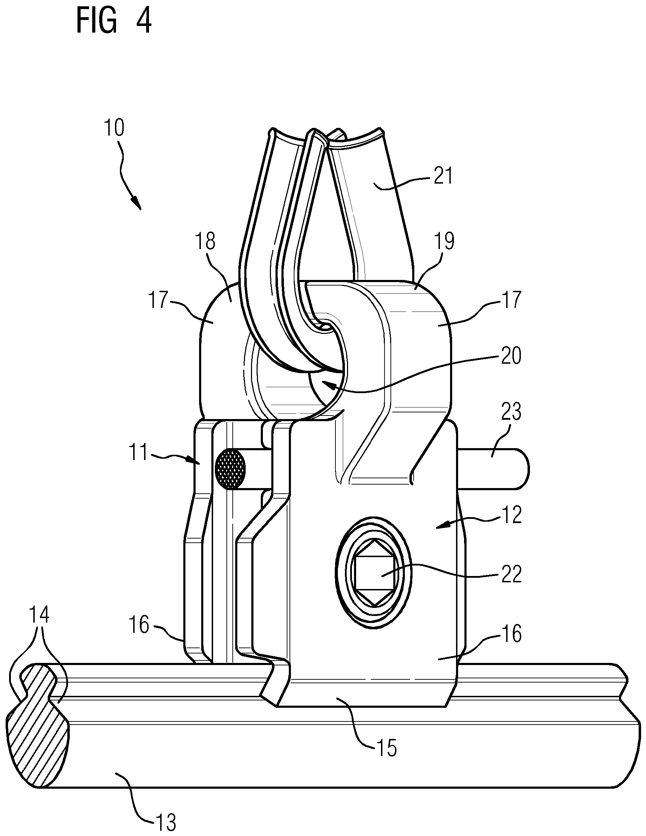

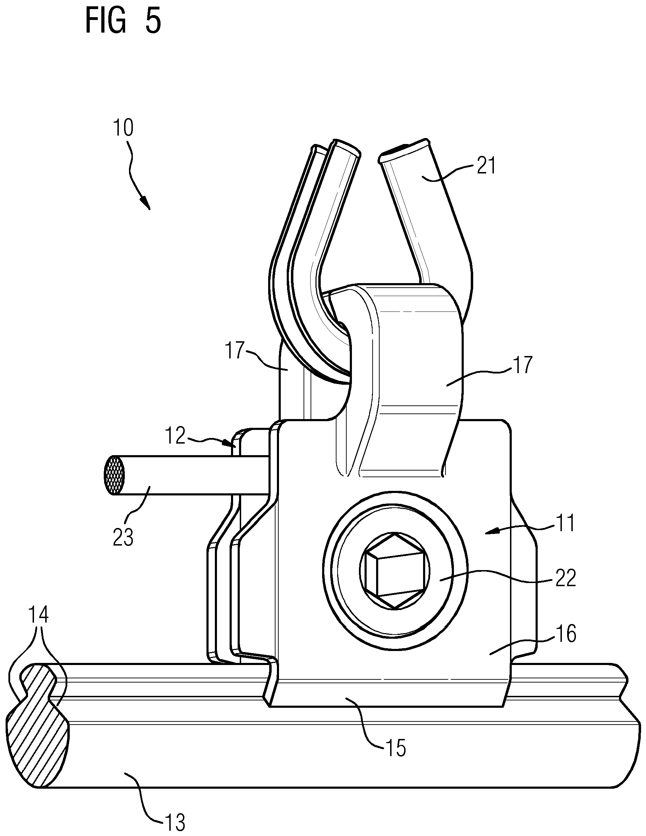

Eine Ausführungsform einer erfindungsgemäßen Klemme 10 ist in den Figuren 4 bis 6 dargestellt. Die Klemme 10 umfasst zwei Klemmhälften 11, 12. Die Klemme 10 ist an einen Fahrdraht 13 geklemmt, der dazu zwei Klemmrillen 14 aufweist.

Die Klemmhälften 11, 12 weisen jeweils ein erstes Ende 16 und ein zweites Ende 17 auf. Die ersten Enden 16 laufen in einem verbundenen Zustand der Klemmhälften 11, 12 aufeinander zu, um über je einen Klemmvorsprung 15 in je eine Klemmrille 14 des Fahrdrahtes 13 einzugreifen.

Die zweiten Enden 17 greifen im verbundenen Zustand der Klemmhälften 11, 12 so ineinander, dass sie über Schlaufenteile 18, 19 eine Schlaufe 20 für eine hängende Verbindung eines Hängerseils 23 mit der Klemme 10 bereitstellen.

Gezeigt ist außerdem eine Kausche 21 zur Führung des Hängerseils 23. Das Hängerseil ist hier der Übersichtlichkeit halber nur in der stromfesten Verbindung gezeigt und nicht in der tragenden Verbindung mit der Klemme über die Schlaufe 20 bzw. die Kausche 21. Die Schlaufenteile 18, 19 können ineinandergreifende Stufenstrukturen aufweisen, um eine sichere Verbindung zu erreichen.

Die Klemme 10 umfasst weiterhin eine Verbindungseinrichtung 22 zur Verbindung der beiden Klemmhälften 11, 12. Die Verbindungseinrichtung 22 ist hier in Form einer Senkschraube vorgesehen. Vorzugsweise ragt die Senkschraube im voll eingeschraubten Zustand in einem verbundenen Zustand der Klemmhälften 11, 12 nicht oder nur um 1 mm in oder/und gegen die Einschraubrichtung über die Klemme 10 hinaus. Die axialen Enden der Senkschraube fluchten also vorzugsweise im voll eingeschraubten Zustand in einem verbundenen Zustand der Klemmhälften 11, 12 zumindest mit den Außenseiten der Klemmhälften 11, 12 oder enden sogar weiter innerhalb der Klemmhälften 11, 12.

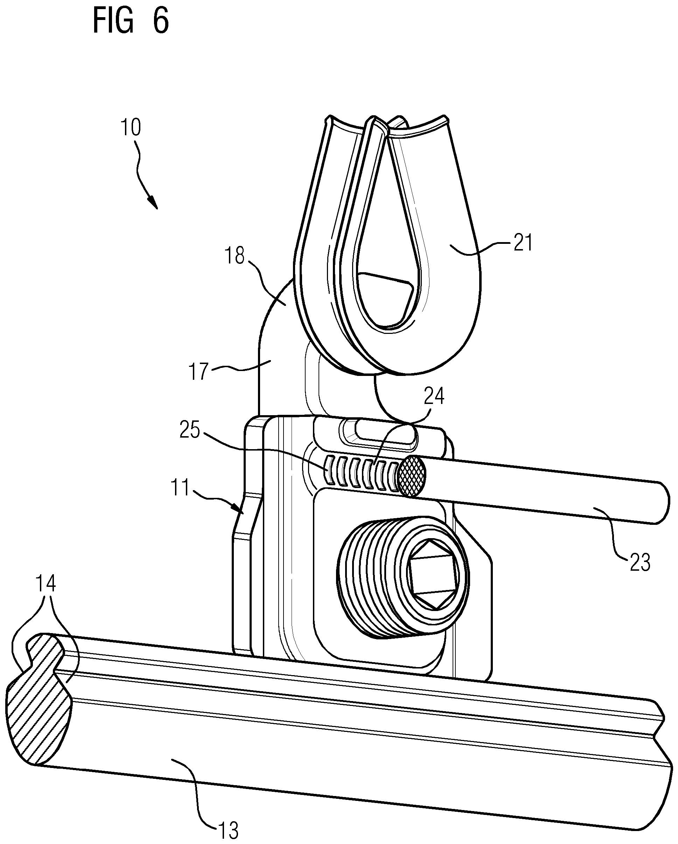

In Figur 6 ist nur die Klemmhälfte 11 während der Installation der Klemme 10 am Fahrdraht 13 dargestellt. Jede der Klemmhälften 11, 12 weist eine der anderen Klemmhälften 11, 12 zugewandten Auflagefläche 24 auf. Die Auflageflächen 24 erzeugen in einem verbundenen Zustand der Klemmhälften 11, 12 eine Klemmverbindung der Klemme 10 mit dem zwischen den Klemmhälften 11, 12 durchgeführten Hängerseil 23 zur stromfesten Verbindung zwischen Klemme 10, dem Fahrdraht 13 und dem Hängerseil 23. Die Auflageflächen 24 weisen eine senkrecht zu einer Durchführungsrichtung des Hängerseils 23 verlaufende Profilierung 25 auf. Damit kann ein Herausrutschen des Hängerseils 23 trotz unvermeidbaren Toleranzen im Durchmesser des Hängerseils 23 und der durch die Auflageflächen 24 gebildeten Öffnung vermieden werden. Bei mit Fahrdraht 13 und Hängerseil 23 verbundener Klemme 10 wird das zwischen den Auflageflächen 24 eingeklemmte Hängerseil 23 im Wesentlichen parallel zum Fahrdraht 13 geführt. Damit lässt sich ein seitliches "Abstehen" des Hängerseils (siehe Figuren 2 und 3) vermeiden.

Die Klemme 10 kann vorzugsweise nur aus den zwei Klemmhälften 11, 12 und der Senkschraube bestehen.

Die Breite der Klemme 10 vom ersten Ende 16 bis zum Ansatz des zweiten Endes 17 ist kleiner als oder gleich 120 % der horizontalen Breite des Fahrdrahtes 13. Unter dem Ansatz des zweiten Endes 17 ist hier der Ansatz der Schlaufenteile 18, 19 zu verstehen. In einer ideal vertikalen Klemmposition der Klemme 10 über dem Fahrdraht 13 dringt die Klemme 10 nicht in einen ausgehend von der Fahrdrahtunterkante durch einen Anstellwinkel α = 60° (vorzugsweise α = 70°) relativ zur Horizontalen definierten Lichtraum ein. Damit kann die erfindungsgemäße Klemme 10 nicht mit dem Stromabnehmer kollidieren im Vergleich zu Klemmen des Standes der Technik und ist damit für nicht-schienengebundene Anwendungen geeignet.
Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die beiliegenden Ansprüche bestimmten Schutzumfang der Erfindung zu verlassen.

## Patentansprüche

1. Klemme (10) zur Befestigung eines Fahrdrahtes (13) an einem Hängerseil (23), umfassend:
- zwei Klemmhälften (11, 12),
- eine Verbindungseinrichtung (22) zur Verbindung der beiden Klemmhälften (11, 12), wobei die Klemmhälften (11, 12) umfassen:
- jeweils ein erstes Ende (16), wobei die ersten Enden (16) in einem verbundenen Zustand der Klemmhälften (11, 12) aufeinander zulaufen, um in Klemmrillen (14) eines Fahrdrahtes (13) einzugreifen,
- jeweils ein zweites Ende (17), wobei die zweiten Enden in einem verbundenen Zustand der Klemmhälften (11, 12) so ineinandergreifen, dass sie eine Schlaufe (20) für eine hängende Verbindung eines Hängerseils (23) mit der Klemme (10) bereitstellen,
- jeweils eine der anderen Klemmhälften (11, 12) zugewandten Auflagefläche (24), wobei die Auflageflächen (24) in einem verbundenen Zustand der Klemmhälften (11, 12) eine Klemmverbindung der Klemme (10) mit dem zwischen den Klemmhälften (11, 12) durchgeführten Hängerseil (23) erzeugen,
**dadurch gekennzeichnet, dass**
die Breite der Klemme (10) quer zur Längsrichtung des Fahrdrahts (13) im Bereich des ersten Endes (16) kleiner als oder gleich 120 % der horizontalen Breite des zu verbindenden Fahrdrahtes (13) ist, insbesondere weniger als 2 mm breiter als der zu verbindende Fahrdraht (13) ist und die Breite der Klemme (10) quer zur Längsrichtung des Fahrdrahts (13) vom ersten Ende (16) bis zum Ansatz des zweiten Endes (17) kleiner als oder gleich 120 % der horizontalen Breite des zu verbindenden Fahrdrahtes (13), insbesondere weniger als 2 mm breiter als der zu verbindende Fahrdraht (13) ist.

2. Klemme (10) nach Anspruch 1, **dadurch gekennzeichnet, dass** die Verbindungseinrichtung (22) eine durch beide Klemmhälften (11, 12) verlaufende Senkschraube umfasst.

3. Klemme (10) nach Anspruch 2, **dadurch gekennzeichnet, dass** die Senkschraube im voll eingeschraubten Zustand in einem verbundenen Zustand der Klemmhälften (11, 12) um 1 mm oder weniger in oder gegen die Einschraubrichtung über die Klemme (10) hinausragt.

4. Klemme (10) nach Anspruch 1 oder 2, **dadurch gekennzeichnet, dass** die Klemme (10) nur aus den zwei Klemmhälften (11, 12) und der Senkschraube besteht.

5. Klemme (10) nach einem der vorstehenden Ansprüche, **dadurch gekennzeichnet, dass** die Auflageflächen (24) eine Profilierung (25) aufweisen.

6. Klemme (10) nach einem der vorstehenden Ansprüche, **dadurch gekennzeichnet, dass** die Auflageflächen (24) so verlaufen, dass bei mit Fahrdraht (13) und Hängerseil (23) verbundener Klemme (10) das zwischen den Auflageflächen (24) eingeklemmte Hängerseil (23) im Wesentlichen parallel zum Fahrdraht (13) geführt wird.

7. Fahrdrahtträgeranordnung umfassend einen Fahrdraht (13) mit zwei Klemmrillen (14) sowie mindestens eine an den Fahrdraht (13) geklemmte Klemme (10) nach einem der vorstehenden Ansprüche,
**dadurch gekennzeichnet, dass**
die Breite der Klemme (10) quer zur Längsrichtung des Fahrdrahts (13) im Bereich des ersten Endes (16) kleiner als oder gleich 120 % der horizontalen Breite des zu verbindenden Fahrdrahtes (13) ist, insbesondere weniger als 2 mm breiter als der zu verbindende Fahrdraht (13) ist und die Breite der Klemme (10) quer zur Längsrichtung des Fahrdrahts (13) vom ersten Ende (16) bis zum Ansatz des zweiten Endes (17) kleiner als oder gleich 120 % der horizontalen Breite des zu verbindenden Fahrdrahtes (13), insbesondere weniger als 2 mm breiter als der zu verbindende Fahrdraht (13) ist.

8. Fahrdrahtträgeranordnung nach Anspruch 7, **dadurch gekennzeichnet, dass** die Klemme (10) derart dimensioniert ist, dass sie in einer ideal vertikalen Klemmposition der Klemme (10) über dem Fahrdraht (13) nicht in einen ausgehend von der Fahrdrahtunterkante durch einen Anstellwinkel α = 60° relativ zur Horizontalen definierten Lichtraum eindringt.

## Claims

1. Clamp (10) for fastening a contact wire (13) to a dropper wire (23), comprising:
- two clamp halves (11, 12),
- a connection facility (22) for connecting the two clamp halves (11, 12), wherein the clamp halves (11, 12) comprise:
- a first end (16) in each case, wherein the first ends (16), in a connected state of the clamp halves (11, 12), converge towards one another in order to engage into clamping grooves (14) of a contact wire (13),
- a second end (17) in each case, wherein the second ends (17), in a connected state of the clamp halves (11, 12), interlock such that they provide a loop (20) for a suspended connection of a dropper wire (23) to the clamp (10),
- a contact area (24) facing the other clamping half (11, 12) in each case, wherein the contact areas (24), in a connected state of the clamp halves (11, 12), generate a clamping connection between the clamp (10) and the dropper wire (23) fed between the clamp halves (11, 12),
**characterised in that**
the width of the clamp (10) transverse to the longitudinal direction of the contact wire (13) in the region of the first end (16) is less than or equal to 120 % of the horizontal width of the contact wire (13) to be connected, in particular less than 2 mm wider than the contact wire (13) to be connected, and the width of the clamp (10) transverse to the longitudinal direction of the contact wire (13) from the first end (16) up to the edge of the second end (17) is less than or equal to 120 % of the horizontal width of the contact wire (13) to be connected, in particular is less than 2 mm wider than the contact wire (13) to be connected.

2. Clamp (10) according to claim 1, **characterised in that** the connection facility (22) comprises a countersunk screw which runs through both clamp halves (11, 12).

3. Clamp (10) according to claim 2, **characterised in that** the countersunk screw, in the fully screwed-in state, in a connected state of the clamp halves (11, 12), protrudes beyond the clamp (10) by 1 mm or less in or against the screwing-in direction.

4. Clamp (10) according to claim 1 or 2, **characterised in that** the clamp (10) only consists of the two clamp halves (11, 12) and the countersunk screw.

5. Clamp (10) according to one of the preceding claims, **characterised in that** the contact areas (24) have a profiling (25) .

6. Clamp (10) according to one of the preceding claims, **characterised in that** the contact areas (24) run such that, in the case of the clamp (10) being connected to contact wire (13) and catenary wire (23), the dropper wire (23) clamped between the contact areas (24) is guided substantially in parallel with the contact wire (13).

7. Contact wire carrier arrangement comprising a contact wire (13) with two clamping grooves (14) as well as at least one clamp (10) according to one of the preceding claims, which is clamped on the contact wire (13),
**characterised in that**
the width of the clamp (10) transverse to the longitudinal direction of the contact wire (13) in the region of the first end (16) is less than or equal to 120 % of the horizontal width of the contact wire (13) to be connected, in particular less than 2 mm wider than the contact wire (13) to be connected, and the width of the clamp (10) transverse to the longitudinal direction of the contact wire (13) from the first end (16) up to the edge of the second end (17) is less than or equal to 120 % of the horizontal width of the contact wire (13) to be connected, in particular is less than 2 mm wider than the contact wire (13) to be connected.

8. Contact wire carrier arrangement according to claim 7, **characterised in that** the clamp (10) is dimensioned such that, in an ideally vertical clamping position of the clamp (10) above the contact wire (13), it does not intrude into a clearance, starting from the contact wire lower edge, defined by a setting angle α = 60° relative to the horizontal.

## Revendications

1. Pince (10) de fixation d'un fil (13) de contact à un câble (23) de suspension, comprenant :
- deux moitiés (11, 12) de pince,
- un dispositif (22) de liaison pour relier les deux moitiés (11, 12) de pince, les moitiés (11, 12) de pince comprenant :
- chacune une première extrémité (16), les premières extrémités (16) allant, dans un état relié des moitiés (11, 12) de pince, l'une sur l'autre, pour pénétrer dans des rainures (14) de serrage d'un fil (13) de contact,
- respectivement une deuxième extrémité (17), les deuxièmes extrémités s'interpénétrant dans un état relié des moitiés (11, 12) de pince de manière à donner avec la pince (10) une boucle (20) pour une liaison de suspension d'un câble (23) de suspension,
- respectivement une surface (24) d'application, tournée vers l'autre moitié (11, 12) de pince, les surfaces (24) d'application produisant, dans un état serré des moitiés (11, 12) de pince, une liaison de serrage de la pince (10) avec le câble (23) de suspension passant entre les moitiés (11, 12) de pince,
**caractérisée en ce que**
la largeur de la pince (10) transversalement à la direction longitudinale du fil (13) de contact est dans la région de la première extrémité (16) inférieure ou égale à 100 % de la largeur horizontale du fil (13) de contact à relier en étant notamment plus large de moins de 2 mm que le fil (13) de contact à relier et la largeur de la pince (10) transversalement à la direction longitudinale du fil (13) de contact d'une première extrémité (16) jusqu'au début de la deuxième extrémité (17) est inférieure ou égale à 120 % de la largeur horizontale du fil (13) de contact à relier, en étant plus large notamment de moins de 2 mm que le fil (13) de contact à relier.

2. Pince (10) suivant la revendication 1, **caractérisé en ce que** le dispositif (22) de liaison comprend une vis à tête fraisée s'étendant à travers les deux moitiés (11, 12) de pince.

3. Pince (10) suivant la revendication 2, **caractérisé en ce que** la vis à tête fraisée dépasse de la pince (10) à l'état complètement vissé dans un état relié des moitiés (11, 12) de la pince de 1 mm ou moins dans le sens de vissage ou dans le sens contraire.

4. Pince (10) suivant la revendication 1 ou 2, **caractérisé en ce que** la pince (10) n'est constituée que des deux moitiés (11, 12) de pince et de la vis à tête fraisée.

5. Pince (10) suivant l'une des revendications précédentes, **caractérisé en ce que** les surfaces (24) d'application ont un profilage (25).

6. Pince (10) suivant l'une des revendications précédentes, **caractérisé en ce que** les surfaces (24) d'application s'étendent de manière à ce que lorsque la pince (10) est reliée au fil (13) de contact et au câble (23) de suspension, le câble (23) de suspension serré entre les surfaces (24) d'application soit sensiblement parallèle au fil (13) de contact.

7. Ensemble de support de fil de contact, comprenant un fil (13) de contact ayant deux rainures (14) de serrage ainsi qu'au moins une pince (10) serrée sur le fil (13) de contact suivant l'une des revendications précédentes,
**caractérisé en ce que**
la largeur de la pince (10) transversalement à la direction longitudinale du fil (13) de contact est dans la région de la première extrémité (16) inférieure ou égale à 100 % de la largeur horizontale du fil (13) de contact à relier, en étant notamment plus large de moins de 2 mm que le fil (13) de contact à relier et la largeur de la pince (10) transversalement à la direction longitudinale du fil (13) de contact d'une première extrémité (16) jusqu'au début de la deuxième extrémité (17) est inférieure ou égale à 120 % de la largeur horizontale du fil (13) de contact à relier en étant plus large notamment de moins de 2 mm que le fil (13) de contact à relier.

8. Ensemble de support de fil de contact suivant la revendication 7, **caractérisé en ce que** la pince (10) a des dimensions telles que, dans une position verticale idéalement de la pince (10) sur le fil (13) de contact, elle ne pénètre pas dans un espace ambiant défini à partir du bord inférieur du fil de contact par un angle d'incidence α = 60° par rapport à l'horizontal.
